Europäisches Patentamt

European Patent Office

Office européen des brevets

(11) Publication number: **0 516 124 A2**

# EUROPEAN PATENT APPLICATION

(21) Application number: **92109057.7**

(22) Date of filing: **29.05.92**

(51) Int. Cl.5: **H04M 1/274**

(30) Priority: **29.05.91 JP 126229/91**

(43) Date of publication of application:
**02.12.92 Bulletin 92/49**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Maeda, Satoru, c/o Sony**
**Corporation**
**7-35 Kitashinagawa 6-chome**
**Shinagawa-ku, Tokyo(JP)**

(74) Representative: **Körber, Wolfhart, Dr. Dipl.-Ing.**
**et al**
**Patentanwälte Mitscherlich & Partner**
**Steinsdorfstrasse 10**
**W-8000 München 22(DE)**

(54) **A telephone apparatus with memory means for storing names, telephone numbers and time information.**

(57) A telephone apparatus includes an input circuit (4) for entering a name to be telephoned, a clock unit (6) for generating a current time, a memory (5) for storing information corresponding to names, telephone numbers, and time differences, a searching unit (3) coupled to the input circuit (4) and the memory (5) for searching a telephone number of the name entered by the input circuit (4), a unit (3) coupled to the memory and the searching unit for deriving a local time of an area corresponding to the searched telephone number of the name based on the time difference and the current time, and a display device (7) for displaying at least the entered name, the searched telephone number, and the local time.

*FIG. 1*

## BACKGROUND OF THE INVENTION

**Field of the Invention**:

The present invention relates generally to a telephone apparatus. More particularly the present invention relates to a telephone apparatus having a search function in which a telephone number of a person to be called can be displayed by entering a name of the person to be called.

**Background:**

When a telephone user wishes to make a telephone call to a foreign country using a telephone apparatus, often the telephone call must be delayed due to a time difference. That is, the user must check the current time of the country to which an outgoing call is made by utilizing a clock or the like indicative of world current times. Alternatively, a time difference table or the like illustrative of time differences between user's country and the foreign countries can be consulted to check the current time of the foreign country to which the outgoing call is made. The time at the call's destination can be determined from time difference information and the current time in the user's country. Then, the user can make an outgoing call to the foreign country at an appropriate time.

In general, when making telephone calls to foreign countries, the user must learn the current time of the foreign country to which the user makes an outgoing call. When the user intends to make a telephone call to a foreign country having a large time difference, the special care is required. This is because the user makes the outgoing call by day, but the person to be called receives the incoming call by night. Accordingly, it is very cumbersome for the user to check the current time of the foreign country to be called by utilizing a world clock illustrative of current times of the whole world, a time difference table or the like. The present invention addresses these problems.

## SUMMARY OF THE INVENTION

Therefore, it is an object of the present invention to provide a telephone apparatus addressing the aforesaid shortcomings and disadvantages.

It is another object of the present invention to provide a telephone apparatus in which, a telephone number can be registered and when selected, the local time of the person to be called can be automatically obtained.

As an aspect of the present invention, a telephone apparatus includes an input circuit for entering a name to be telephoned, a clock circuit for generating a current time, a memory for storing information corresponding to names, telephone numbers, and time differences, a searching circuit coupled to the input circuit and the memory for searching a telephone number of the name entered by the input circuit, a circuit coupled to the memory and the searching circuit for deriving a local time of an area corresponding to the searched telephone number of the name based on the time difference and the current time, and a circuit for displaying at least the entered name, the searched telephone number, and the local time.

## BRIEF DESCRIPTION OF THE DRAWINGS

A better understanding of other objects, features, and advantages of the present invention can be gained from consideration of the following detailed description of an illustrative embodiment thereof, in conjunction with the figures of the accompanying drawings, in which:

FIG. 1 is a block diagram showing a telephone apparatus according to an embodiment of the present invention;

FIG. 2 is an explanatory diagram showing a displayed condition of a display unit of the telephone apparatus according to the present invention;

FIG. 3 is a schematic diagram showing an external appearance of the telephone apparatus according to the present invention; and

FIG. 4 is a flowchart describing operation of the telephone apparatus according to the present invention.

## DETAILED DESCRIPTION OF THE PREFERRED EMBODIMENT

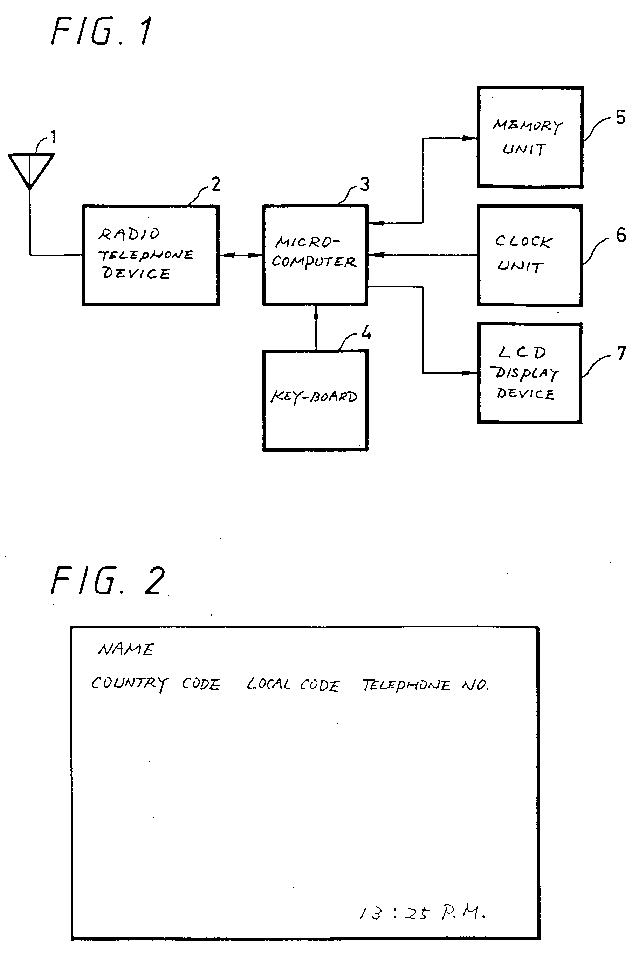

A telephone apparatus according to an embodiment of the present invention will hereinafter be described with reference to FIG. 1. FIG. 1 shows a wireless handset of a cellular type wireless telephone apparatus or cordless telephone apparatus, for example. In FIG. 1, reference numeral 1 represents an antenna and the transmission and reception are carried out by a radio telephone device 2 by way of this antenna 1. Reference numeral 3 represents a micro-computer. Associated names, company names and telephone numbers or the like are entered together, for example, by use of a key-board 4 having a ten-key and an alphabetic-key section. The telephone numbers are stored in a non-volatile memory unit (i.e., battery backed-up RAM (random access memory) or the like) 5 together with the names and the company names under the control of the micro-computer 3.

The user can carry out a search by entering the person's names, company names or the like, using the key-board 4 during a search operation.

The result of a successful search is a display of the name and telephone number and other information stored in memory unit 5.

In addition, time difference information for each country is read out from the memory unit 5 on the basis of, for example, the country code (first number in the international telephone system) of the telephone number. Also, the current time is read out from a clock unit 6. Accordingly, time information for the corresponding country is calculated on the basis of the time difference information and the current local time thus read-out. Then, time information thus calculated is displayed on an LCD (liquid crystal display) display device 7 together with the telephone number. The storage area of the memory unit 5 stores therein the name, the country code, the area code and the telephone number, preferably in the sequential order shown in FIG. 2.

If the country has domestic time differences, for example, on the basis of the area code (e.g., code next to the country code) of the telephone number, the local time difference information is read out from the memory unit 5 and the time information is read out from the clock unit 6. Accordingly, the time information of the country is calculated on the basis of this time difference information and the time information. The time information thus calculated is displayed on the LCD display device 7 together with the telephone number.

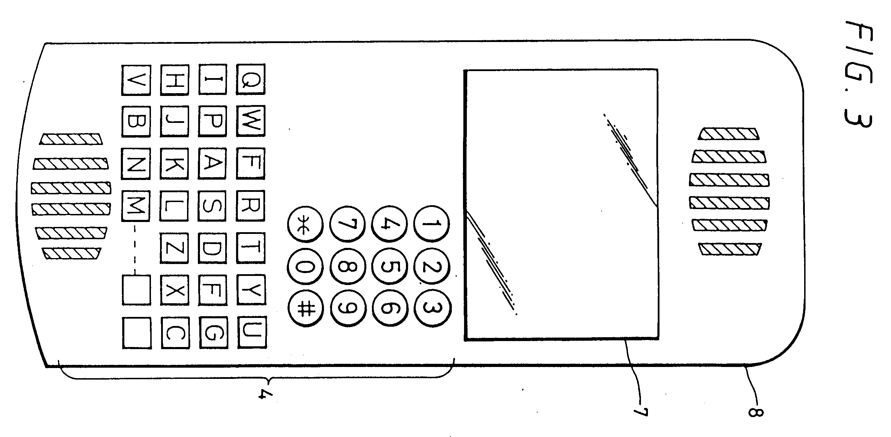

The preferred external appearance of this telephone apparatus is shown in FIG. 3, wherein the above respective circuits are housed in a casing 8 and the LCD display device 7 and the key-board 4 are provided on the surface of the casing 8.

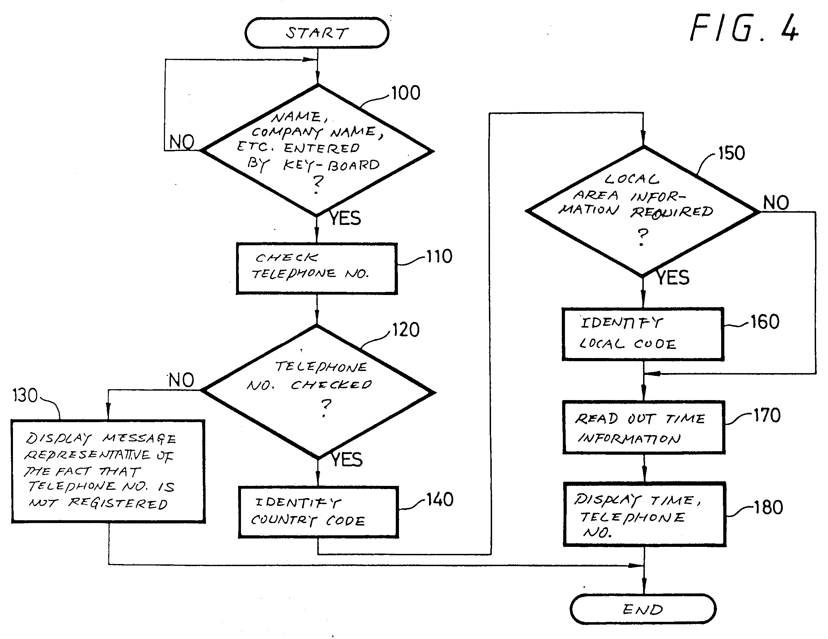

The operation in which the telephone number is searched for by the above-mentioned telephone apparatus will be described with reference to the flowchart of FIG. 4. Following the Start of operation, it is determined in decision step 100 whether or not a name, a company are entered by the key-board 4. If a YES is output at decision step 100, then the processing proceeds to the next step 110. In step 110, telephone numbers are searched. In this searching, the micro-computer 3 shown in FIG. 1 searches the telephone numbers stored in the memory unit 5 together with names and company names, and the processing proceeds to the next decision step 120.

In decision step 120, it is determined whether or not the telephone number is detected during the searching. If a YES is output at decision step 120, then the processing proceeds to step 140. If on the other hand a NO is output at decision step 120, then the processing proceeds to step 130.

In step 130, a message representative of the fact that the telephone numbers of the name and company name are not registered is displayed on the LCD display device 7. Then, the processing is ended.

In step 140, information concerning the time difference of the country or the like is read out from the memory unit 5 on the basis of the country code of the telephone number thus searched. Then, the processing proceeds to the next decision step 150. In decision step 150, it is determined on the basis of the information concerning the time difference of the country read out from the memory unit 5 whether or not the country is a country such as the U.S.A. or Canada having multiple domestic time zones. If a YES is output at decision step 150, then the processing proceeds to step 160. If on the other hand a NO is output at decision step 150, then the processing proceeds to step 170.

In step 160, on the basis of the area code of the telephone number thus searched, information concerning a local time difference is read out from the memory unit 5 and the processing proceeds to the next step 170. In step 170, the current time is read out from the clock unit 6. The local time of the country or area of the searched telephone number is obtained on the basis of information concerning the country, the local time difference of the country or area of the searched telephone number or the like obtained in steps 140 and 160. Then, the processing proceeds to step 180. In step 180, the time information obtained in step 170 and the telephone number are displayed on the LCD display device 7.

As described above, according to this embodiment, the telephone numbers are stored in the memory unit 5 together with the names, the company names or the like. When the telephone number is searched, the telephone number to be called and the time of the telephone number of the called party are displayed on the LCD display device 7 only by entering the name, the company name or the like by the key-board 4. Therefore, the telephone apparatus of this invention is well suited to making international calls.

While the time information is read out from the memory unit 5 during a search as described above, variants are also possible, for example, a time information storage area may be provided in advance in the telephone number storage area of the memory unit 5. This time information storage area may be rewritten periodically. The time information may be displayed during the search by reading out this time information stored in the time storage area.

According to the present invention, when the telephone number is searched by entering names, company names or the like by the keyboard 4 or other input device, the information corresponding to the searched telephone number is read out from the memory and also the time is read out from the clock. Further, the time corresponding to the searched telephone number is obtained on the basis of the information and time thus read-out and this time is displayed on the display. Therefore, the time corresponding to the telephone number searched is obtained at the same time the telephone number is searched.

Having described the preferred embodiment of the invention with reference to the accompanying drawings, it is to be understood that the invention is not limited to that precise embodiment and that various changes and modifications thereof could be effected by one skilled in the art without departing from the spirit or scope of the invention as defined in the appended claims.

**Claims**

1. A telephone apparatus comprising:
   (a) input means (4) for permitting entry of a name to be telephoned;
   (b) clock means (6) for generating a current time;
   (c) memory means (5) for storing information corresponding to names, telephone numbers, corresponding to said names and time differences;
   (d) searching means (3) coupled to said input means (4) and said memory means (5) for searching a telephone number associated with the name entered into said input means (4);
   (e) deriving means (3) coupled to said memory means (4) and said searching means (3) for deriving a local time of an area corresponding to the searched telephone number corresponding to said name based on said time difference and said current time; and
   (f) display means (7) for displaying at least said entered name, said searched telephone number, and said local time.

2. A telephone apparatus as cited in claim 1, wherein said input means (4) includes an alphabetic keyboard for entering said name to be telephoned and a ten-key keyboard.

3. A telephone apparatus as cited in claim 1 or 2, wherein said display means (7) includes a liquid crystal display means (7) for displaying said name, said local time, and said telephone number including a country code and an area code.

4. A telephone apparatus as cited in anyone of claims 1 to 3, further comprising a micro-computer (3) for managing said input means (4), said memory means (5), said searching means (3), said deriving means (3), and said display means (7).

5. A telephone apparatus comprising:
   (a) input means (4), including an alphabetic keyboard and a numeric keyboard for permitting entry of a name to be telephoned;
   (b) clock means (6) for generating a current time;
   (c) memory means (5) for storing information corresponding to names, telephone numbers, corresponding to said names and time differences;
   (d) searching means (3) coupled to said input means (4) and said memory means (5) for searching a telephone number associated with the name entered into said input means (4);
   (e) deriving means (3) coupled to said memory means (5) and said searching means (3) for deriving a local time of an area corresponding to the search telephone number corresponding to said name based on said time difference and said current time;
   (f) liquid crystal display means (7) for displaying at least said entered name, said searched telephone number, and said local time; and
   (g) a micro-computer (3) for managing said input means (4), said memory means (5), said searching means (3), said deriving means (3), and said display means (7).

6. A method for operation of a telephone, comprising the steps of:
   receiving (100) entry of a name of a party to be called from an input device (4);
   searching (110) a memory device (5) for said name;
   retrieving (140, 160) an indication of a time difference associated with said name from said memory device (5);
   determining (170) a local time; and
   deriving (170) a time associated with said name from said indication of time difference and said local time.

7. The method of claim 6, wherein said step of determining (170) a local time includes reading a local time from a clock circuit (6).

8. The method of claim 6 or 7, wherein said retrieving (140, 160) step includes retrieving (140) a country doced associated with said name and determining a time difference from said country code.

9. The method of anyone of claims 6 to 8, wherein said retrieving step (140, 160) includes retrieving (160) an area code associated with said name and determining a time difference from said area code.

10. The method of anyone of claims 6 to 9, further comprising the step of displaying (180) said time associated with said name.

11. The method of anyone of claims 6 to 10, further comprising the steps of:

retrieving (110) a telephone number associated with said name from said memory device (5); and

displaying (180) said telephone number associated with said name.

12. The method of anyone of claims 6 to 11, further comprising the steps of:

determining (110, 120) that a telephone number associated with said name is not stored in said memory device (5); and

displaying (130) a message indicating that there is no telephone number associated with said name stored in said memory device (5).

13. A method for operation of a telephone, comprising the steps of:

receiving (100) entry of a name of a party to be called from an input device (4);

searching (110) a memory device (5) for said name;

retrieving (140, 160) a country code and an area code from said memory device (5) as an indication (170) of a time difference associated with said name from said memory device (5);

reading (170) a local time from a clock circuit;

retrieving (110) a telephone number associated with said name from said memory device;

deriving (170) a time associated with said name from said indication of time difference and said local time; and

displaying (180) said time and said telephone number associated with said name.

## FIG. 1

## FIG. 2

# FIG. 3

FIG. 4

START

NAME, COMPANY NAME, ETC. ENTERED BY KEY-BOARD ? — 100
NO / YES

CHECK TELEPHONE NO. — 110

TELEPHONE NO. CHECKED ? — 120
NO / YES

DISPLAY MESSAGE REPRESENTATIVE OF THE FACT THAT TELEPHONE NO. IS NOT REGISTERED — 130

IDENTIFY COUNTRY CODE — 140

LOCAL AREA INFORMATION REQUIRED ? — 150
NO / YES

IDENTIFY LOCAL CODE — 160

READ OUT TIME INFORMATION — 170

DISPLAY TIME, TELEPHONE NO. — 180

END

EP 0 516 124 A2